# EUROPÄISCHE PATENTSCHRIFT

(11) **EP 2 799 273 B1**
(45) Veröffentlichungstag und Bekanntmachung des Hinweises auf die Patenterteilung: **01.07.2015**
(21) Anmeldenummer: 13166254.6
(22) Anmeldetag: 02.05.2013
(51) Int. Cl.: B60K 15/01, F16L 11/127, F16L 25/01, F16L 33/22, F16L 33/28, B60K 15/03, B60K 15/04

(54) **Tanksystem**
Tank system
Système de citerne

(43) Veröffentlichungstag der Anmeldung: 05.11.2014
(73) Patentinhaber: MAGNA STEYR Fuel Systems GesmbH, 8261 Sinabelkirchen (AT)
(72) Erfinder: Steinmann, Dominik, 8223 Stubenberg (AT); Zierler, Patrick, 8063 Brodingberg (AT)
(74) Vertreter: Zangger, Bernd

(56) Entgegenhaltungen:
- DE-A1-102008 054 247
- US-A1- 2004 201 217

## Beschreibung

### Gebiet der Erfindung

Die vorliegende Erfindung betrifft ein Tanksystem mit einem Einfüllrohr und einem mit dem Einfüllrohr verbundenen Einfüllschlauch, wobei der Einfüllschlauch zu einem Kraftstofftank führt. Das Einfüllrohr und der Einfüllschlauch dienen dazu den Kraftstofftank zu befüllen. Derartige Tanksysteme werden insbesondere in Kraftfahrzeugen eingesetzt.

### Stand der Technik

Es ist bekannt Einfüllrohre über einen Schlauch mit einem Tank zu verbinden. Die DE 10 2008 054 247 A1 beschreibt einen Kraftstofftank mit einem Einfüllstutzen, der mit einem im Tank angeordneten Befüllelement verbunden ist, wobei das Befüllelement aus einem flexiblen Schlauch besteht. Der flexible Schlauch ist über ein Klemmelement am Einfüllstutzen befestigbar.

Für ein Einfüllrohr welches mit einem Schlauch verbunden wird, ist es auch bekannt, eine Hülse im Inneren des Einfüllrohres zu verwenden, welche das Einfüllrohr stützt, damit es nicht nachgibt, wenn der Schlauch, beispielsweise mit einer Schelle, am Einfüllrohr befestigt wird.

Es ist ferner bekannt, dass die innere Oberfläche eines aus Kunststoff bestehenden Kraftstoffschlauches durch die Kraftstoffströmung elektrostatisch geladen werden kann. Um das Auftreten elektrostatischer Probleme zu verhindern, verwendet DE 199 15 373 A1 eine Kraftstoffschlauchkunststoffkupplung zum Verbinden eines Kunststoffkraftstoff-schlauches mit einem Metallrohr dass geerdet ist, wobei der elektrische Widerstand des Kupplungskörpers bezüglich des spezifischen Oberflächenwiderstandes zwischen 10⁶ und 10¹⁰ Ohm beträgt.

Die gattungsbildende US 2004//201217 A1 offenbart ein Tanksystem mit einem Einfüllrohr und einem mit dem Einfüllrohr verbundenen Einfüllschlauch. Zur Stützung der Verbindung zwischen dem Einfüllrohr und dem Einfüllschlauch wird ein leitfähiger Verbindungs-Einsatz als Stützhülse verwendet.

### Zusammenfassung der Erfindung

Es ist eine Aufgabe der Erfindung, ein Tanksystem anzugeben, das mit einfachsten Mitteln durch elektrostatische Aufladung drohende Probleme verhindert und kostengünstig herstellbar ist.

Die Lösung der Aufgabe erfolgt durch ein Tanksystem mit den Merkmalen des Anspruchs 1.

Erfindungsgemäß ist eine elektrisch leitfähige Stützhülse vorgesehen, die die Verbindungsstelle zwischen Einfüllrohr und Einfüllschlauch abstützt und gleichzeitig zur Ableitung elektrischer Spannungen über Einfüllschlauch und Einfüllrohr genutzt wird. Die Stützhülse ist aus Kunststoff hergestellt und kann somit einfach und kostengünstig so ausgeformt werden, dass sie sowohl am Einfüllrohr als auch am Einfüllschlauch gut elektrisch leitend anliegt.

Die Stützhülse liegt sowohl am Einfüllrohr als auch am Einfüllschlauch radial innen an. Die Stützhülse kann dann besonders einfach, insbesondere zylindrisch ausgebildet sein.

Erfindungsgemäß weist die Stützhülse an ihrem ersten Ende, das dem Einfüllschlauch zugewandt ist, eine radial außen liegende Ausformung auf, die dazu ausgebildet ist, radial innen am Einfüllschlauch anzuliegen, um so einen sicheren elektrisch leitenden Kontakt mit der Innenseite des Einfüllschlauches zu gewährleisten.

Erfindungsgemäß ist die Ausformung schräg nach hinten, zum zweiten Ende der Stützhülse hin, ausgerichtet. Dadurch ist trotz dichtem Anliegen des Einfüllschlauches an der Stützhülse bei der Herstellung ein einfaches Aufschieben des Einfüllschlauches auf die Stützhülse möglich.

Weiterbildungen der Erfindung sind in den abhängigen Ansprüchen, der Beschreibung sowie den beigefügten Zeichnungen angegeben.

Besonders bevorzugt ist die Ausformung durch mehrere am Umfang der Stützhülse verteilte federnde Laschen gebildet. Dadurch ist eine sichere Kontaktierung des Einfüllschlauches gewährleistet, auch wenn der Einfüllschlauch beispielsweise unter Kraftstoffeinfluss aufquillt oder durch hohen Innendruck, zum Beispiel bei Drucktanks, aufgebläht wird.

Bevorzugt sind zwischen den federnden Laschen, zur einfacheren Positionierung der Stützhülse am Einfüllrohr, Stützrippen angeordnet.

Bevorzugt ist die Stützhülse an ihrem zweiten Ende, das dem Einfüllrohr zugewandt ist, eben ausgebildet, um radial innen am Einfüllrohr anzuliegen. Die Stützhülse bildet daher, abgesehen von einer Ausformung am dem Einfüllschlauch zugewandten Ende, bevorzugt einen einfachen Zylinder.

Bevorzugt sind das Einfüllrohr und/oder der Einfüllschlauch radial innen mit einer elektrisch leitfähigen Schicht versehen, so dass das Einfüllrohr und/oder der Einfüllschlauch nicht als ganze elektrisch leitfähig ausgebildet sein müssen, um die Leitfähigkeit der Bauteile zu gewährleisten.

### Kurzbeschreibung der Zeichnungen

Die Erfindung wird im Folgenden beispielhaft unter Bezugnahme auf die Zeichnungen beschrieben.
- Fig. 1: ist eine Ansicht auf das erste Ende einer Stützhülse eines erfindungsgemäßen Tanksystems.
- Fig. 2: ist eine Schnittdarstellung entsprechend B-B der Fig. 1.
- Fig. 3: ist eine dreidimensionale Darstellung einer Stützhülse gemäß Fig. 1 und Fig. 2.
- Fig. 4: ist eine Schnittansicht die eine Stützhülse, gemäß Fig. 2, mit einem Einfüllrohr und einem Einfüllschlauch zeigt.

### Detaillierte Beschreibung der Erfindung

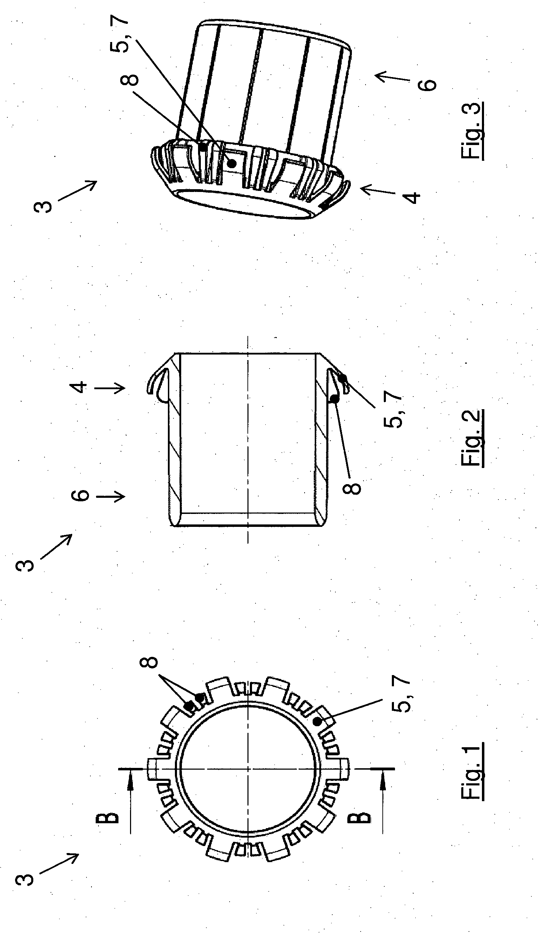

In den Fig. 1-3 ist eine Stützhülse eines erfindungsgemäßen Tanksystems dargestellt. Die Stützhülse 3 besteht aus einem zylindrischen Grundkörper aus elektrisch leitfähigem Kunststoff, der an einem ersten Ende 4 eine Ausformung 5 aufweist. Die Ausformung 5 wird gebildet durch am Umfang des Grundkörpers regelmäßig verteilte Laschen 7, die schräg nach hinten, nämlich zum zweiten Ende 6 der Stützhülse 3 hin und radial nach außen ausgerichtet sind. Zwischen zwei Laschen 7 sind jeweils 2 kleinere Stützrippen 8 angeordnet, die ebenfalls schräg nach hinten, zum zweiten Ende 6 der Stützhülse 3 hin, ausgebaucht sind. An seinem zweiten Ende 6 ist die Stützhülse 3 eben ausgebildet, behält also deren zylindrische Form bei.

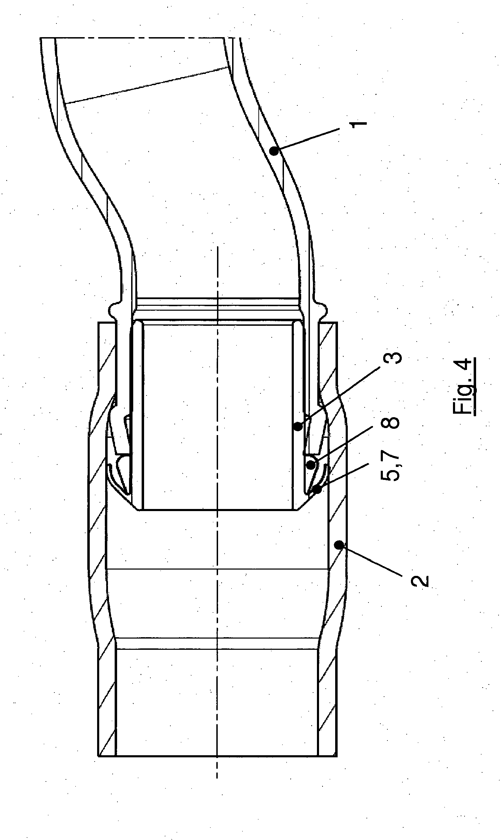

Wie in Fig. 4 ersichtlich, kann das zylindrische zweite Ende 6 der Stützhülse 3 in ein Einfüllrohr 1 eingeschoben sein, wobei die Stützrippen 8 einen Anschlag zur axialen Positionierung der Stützhülse 3 am Einfüllrohr 1 bilden. Ein Einfüllschlauch 2 ist über die Stützhülse 3 und über einen Endabschnitt des Einfüllrohres 1 gezogen. Sowohl das Einfüllrohr 1 als auch der Einfüllschlauch 2 sind innen mit einer elektrisch leitfähigen Schicht versehen. Die Außenseite des zweiten Endes 6 der Stützhülse 3 liegt innen am Einfüllrohr 1 an, die Außenseite des ersten Endes 4 der Stützhülse, insbesondere die Außenseite der Laschen 7 der Stützhülse 3 liegt innen am Einfüllschlauch 2 an, auch wenn dieser im Kontaktbereich aufgebläht ist. Dadurch wird mittels der Stützhülse 3 eine sichere elektrische Verbindung zwischen dem Einfüllrohr 1 und dem Einfüllschlauch 2 hergestellt.

### Bezugszeichenliste

- 1: Einfüllrohr
- 2: Einfüllschlauch
- 3: Stützhülse
- 4: erstes Ende der Stützhülse
- 5: Ausformung
- 6: zweites Ende der Stützhülse
- 7: Lasche
- 8: Stützrippe

## Patentansprüche

1. Tanksystem mit einem Einfüllrohr (1) und einem mit dem Einfüllrohr (1) verbundenen Einfüllschlauch (2), wobei der Einfüllschlauch (2) zu einem Kraftstofftank führt, wobei zur Stützung der Verbindung des Einfüllrohres (1) mit dem Einfüllschlauch (2) eine Stützhülse (3) vorgesehen ist,wobei die Stützhülse (3) aus elektrisch leitfähigem Kunststoff hergestellt ist, das Einfüllrohr (1) sowie der Einfüllschlauch (2) elektrisch leitfähig ausgebildet sind und die Stützhülse (3) sowohl am Einfüllrohr (1) als auch am Einfüllschlauch (2) anliegt, wobei die Stützhülse (3) sowohl am Einfüllrohr (1) als auch am Einfüllschlauch (2) radial innen anliegt,
**dadurch gekennzeichnet, dass** die Stützhülse (3) an ihrem ersten Ende (4), das dem Einfüllschlauch (2) zugewandt ist, eine radial außen liegende Ausformung (5) aufweist, die dazu ausgebildet ist radial innen am Einfüllschlauch (2) anzuliegen, wobei die Ausformung (5) schräg nach hinten, zum zweiten Ende (6) der Stützhülse (3) hin, das dem Einfüllrohr (1) zugewandt ist, ausgerichtet ist.

2. Tanksystem nach Anspruch 1,
**dadurch gekennzeichnet, dass** die Ausformung (5) durch mehrere am Umfang der Stützhülse (3) verteilte federnde Laschen (7) gebildet ist.

3. Tanksystem nach Anspruch 2,
**dadurch gekennzeichnet, dass** zwischen den federnden Laschen (7) Stützrippen (8) angeordnet sind.

4. Tanksystem nach zumindest einem der vorhergehenden Ansprüche,
**dadurch gekennzeichnet, dass** die Stützhülse (3) an ihrem zweiten Ende (6), das dem Einfüllrohr (1) zugewandt ist, eben ausgebildet ist, um radial innen am Einfüllrohr (1) anzuliegen.

5. Tanksystem nach zumindest einem der vorhergehenden Ansprüche,
**dadurch gekennzeichnet, dass** das Einfüllrohr (1) und/oder der Einfüllschlauch (2) radial innen mit einer elektrisch leitfähigen Schicht versehen sind.

## Claims

1. Tank system having a filling pipe (1) and a filling hose (2) which is connected to the filling pipe (1), the filling hose (2) leading to a fuel tank, a support sleeve (3) being provided in order to support the connection of the filling pipe (1) to the filling hose (2), wherein the support sleeve (3) is produced from electrically conductive plastics material, the filling pipe (1) and the filling hose (2) are constructed in an electrically conductive manner and the support sleeve (3) is in abutment with both the filling pipe (1) and the filling hose (2), wherein the support sleeve (3) is radially in abutment at the inner side with both the filling pipe (1) and the filling hose (2), **characterized in that** the support sleeve (3) has at the first end (4) thereof, which faces the filling hose (2), a radially outward formation (5) which is constructed to be in abutment with the filling hose (2) at the radially inner side, wherein the formation (5) is orientated obliquely backwards, towards the second end (6) of the support sleeve (3) facing the filling pipe (1).

2. Tank system according to Claim 1,
**characterized in that** the formation (5) is formed by a plurality of resilient tongues (7) which are distributed over the periphery of the support sleeve (3).

3. Tank system according to Claim 2,
**characterized in that** support ribs (8) are arranged between the resilient tongues (7).

4. Tank system according to at least one of the preceding claims,
**characterized in that** the support sleeve (3) is constructed in a planar manner at the second end (6) thereof facing the filling pipe (1) in order to be in radial abutment with the filling pipe (1) at the inner side.

5. Tank system according to at least one of the preceding claims,
**characterized in that** the filling pipe (1) and/or the filling hose (2) is/are provided at the radially inner side with an electrically conductive layer.

## Revendications

1. Système de réservoir avec un tube de remplissage (1) et avec un tuyau de remplissage (2) connecté au tube de remplissage (1), dans lequel le tuyau de remplissage (2) conduit à un réservoir de carburant, dans lequel il est prévu une douille de soutien (3) pour soutenir la connexion du tube de remplissage (1) avec le tuyau de remplissage (2), dans lequel la douille de soutien (3) est fabriquée en une matière plastique électriquement conductrice, le tube de remplissage (1) ainsi que le tuyau de remplissage (2) sont électriquement conducteurs et la douille de soutien (3) repose aussi bien sur le tube de remplissage (1) que sur le tuyau de remplissage (2), dans lequel la douille de soutien (3) s'applique radialement à l'intérieur aussi bien sur le tube de remplissage (1) que sur le tuyau de remplissage (2), **caractérisé en ce que** la douille de soutien (3) présente, à sa première extrémité (4) qui est tournée vers le tuyau de remplissage (2), un profil (5) situé radialement à l'extérieur, qui est conçu pour s'appliquer radialement à l'intérieur sur le tuyau de remplissage (2), dans lequel le profil (5) est orienté en oblique vers l'arrière, vers la deuxième extrémité (6) de la douille de soutien (3), qui est tournée vers le tube de remplissage (1).

2. Système de réservoir selon la revendication 1, **caractérisé en ce que** le profil (5) est formé par plusieurs lamelles élastiques (7) réparties à la périphérie de la douille de soutien (3).

3. Système de réservoir selon la revendication 2, **caractérisé en ce que** des nervures d'appui (8) sont disposées entre les lamelles élastiques (7).

4. Système de réservoir selon au moins une des revendications précédentes, **caractérisé en ce que** la douille de soutien (3) est de forme plane à sa deuxième extrémité (6), qui est tournée vers le tube de remplissage (1), afin de s'appliquer radialement à l'intérieur sur le tube de remplissage (1).

5. Système de réservoir selon au moins une des revendications précédentes, **caractérisé en ce que** le tube de remplissage (1) et/ou le tuyau de remplissage (2) sont dotés radialement à l'intérieur d'une couche électriquement conductrice.
